# EUROPEAN PATENT APPLICATION

(11) **EP 1 819 070 A1**
(43) Date of publication of application: **15.08.2007**
(21) Application number: 06290243.2
(22) Date of filing: 09.02.2006
(51) Int. Cl.: H04B 10/158, H04L 7/00

(54) **Clock recovery circuit and method for optical receiver**

(71) Applicant: Alcatel Lucent, 75008 Paris (FR)
(72) Inventor: Bülow, Henning, 70806 Kornwestheim (DE)
(74) Representative: Kohler Schmid Möbus

(57) **Abstract**

A clock recovery circuit (1a) for a digital signal (DS) comprising a clock signal and a high-frequency jitter component due to polarisation scrambling in the optical domain.

The proposed clock recovery circuit comprises:
- a first clock recovery sub-circuit (5) adapted to generate a first auxiliary clock signal (CS1) with said high-frequency jitter component at least partly removed,
- a second clock recovery sub-circuit (6) adapted to generate a second auxiliary clock signal (CS2) still comprising said high-frequency jitter component,
- a phase comparator (7) connected with the first and second clock recovery sub-circuits and adapted to compare respective phases of the first and second auxiliary clock signals to produce a high-frequency jitter signal (JS, JS') depending on a phase difference between the first and second auxiliary clock signals, and
- a phase modulator (8) connected with the first clock recovery sub-circuit and the phase comparator and adapted to modulate a phase of the first auxiliary clock signal with the high-frequency jitter signal to generate a recovered clock signal (CS).

The above-described circuit provides distortion and jitter tolerant clock recovery for optical receivers.

## Description

### Background of the invention

The present invention relates to a clock recovery circuit for recovering a clock signal from a digital signal comprising a high-frequency jitter component due to polarisation scrambling in the optical domain.

The present invention also relates to an optical receiver comprising means for converting a received signal in the optical domain to a digital signal in the electrical domain, wherein said digital signal comprises a clock signal and a high-frequency jitter component due to polarisation scrambling in the optical domain.

Furthermore, the present invention relates to a method of recovering a clock signal from a digital signal comprising the clock signal and a high-frequency jitter component due to polarisation scrambling in the optical domain.

Polarisation Mode Dispersion (PMD) is a serious problem in state of the art optical multi-channel transmission systems. In this context, Distributed Polarisation Scrambling (PSC) in a conjunction with Forward Error Correction (FEC) has been shown to provide efficient multi-channel PMD mitigation. However, polarisation scrambling together with PMD generated by optical fibre links induces jitter and distortion of an optical signal received by an optical receiver in an optical transmission system of the above-mentioned type. This gives rise to a high-frequency jitter component in the received optical signal due to the high scrambling rates used, e.g. 20 MHz or even 40 MHz. Such scrambling rates are necessary in order to take advantage of the higher burst error correction efficiency of FEC. However, prior art clock recovery circuits used in optical receivers do not operate with high PMD distortion, fast jitter, and low optical signal-to-noise ratios (OSNR), e.g. 15 dB for a 40 Gbit/s optical transmission system.

### Object of the invention

It is the object of the present invention to provide a clock recovery circuit and method for use in an optical receiver, which are tolerant with respect to distortion and high-frequency jitter of a received optical signal.

### Description of the invention

According to a first aspect of the present invention the object is achieved by providing a clock recovery circuit of the above-mentioned type, comprising:
- a first clock recovery sub-circuit adapted to generate a first auxiliary clock signal with said high-frequency jitter component at least partly removed,
- a second clock recovery sub-circuit adapted to generate a second auxiliary clock signal still comprising said high-frequency jitter component,
- a phase comparator connected with the first and second clock recovery sub-circuits for comparing respective phases of the first and second auxiliary clock signals to produce a high-frequency jitter signal depending on a phase difference between first and second auxiliary clock signals, and
- a phase modulator connected with the first clock recovery sub-circuit and the phase comparator and adapted to modulate the phase of a first auxiliary clock signal with the high-frequency jitter signal to generate a recovered clock signal.

According to a second aspect of the present invention, the object is also achieved by providing an optical receiver of the above-mentioned type which further comprises a clock recovery circuit according to said first aspect of the present invention.

Furthermore, according a third aspect of the present invention the object is achieved by providing a method of the above-mentioned type, comprising the steps of:
- generating from the digital signal a first auxiliary clock signal with said high-frequency jitter component at least partly removed,
- generating from the digital signal a second auxiliary clock signal still comprising said high-frequency jitter component,
- comparing respective phases of the first and second auxiliary clock signals to produce a high-frequency jitter signal depending on a phase difference between the first and second auxiliary clock signals, and
- modulating the phase of the first auxiliary clock signal with the high-frequency jitter signal to generate a recovered clock signal.

In a further embodiment of the clock recovery circuit in accordance with the present invention the first clock recovery sub-circuit is devised as a digital PLL-type (Phase Locked Loop type) clock recovery sub-circuit, which as such can cope with signal distortion, but not with fast jitter, as known to a person skilled in the art.

In yet another embodiment of the clock recovery circuit in accordance with the present invention the second clock recovery sub-circuit is devised as a filter-type clock recovery sub-circuit, preferably comprising a non-linear element in conjunction with a broadband clock filter, thus outputting a clock line including fast jitter components at the price of a high noise contribution.

Since some of the parameters of the scrambling jitter is known, e.g. the maximum amplitude due to the known maximum tolerable PMD or the frequency range due to the known polarization scrambler frequencies, as mentioned above, the output of the phase comparator can effectively be processed, e.g. by limiting its amplitude to remove noise from the phase difference signal. To this end, in a further embodiment of the clock recovery circuit in accordance with the present invention the latter further comprises linear or non-linear filter means adapted to process the output of the phase comparator, e.g. limit an output amplitude or limit the frequency range of the latter. In a corresponding further embodiment of the method in accordance with the present invention the latter further comprises the step of limiting an output amplitude, limit the frequency range, or apply further linear or non-linear processing of the phase comparator.

Further advantages and characteristics of the present invention can be gathered from the following description of preferred embodiments given by way of example only with reference to the enclosed drawings. The features mentioned above as well as below can be used in accordance with the present invention either individually or in conjunction. The embodiments mentioned are not to be understood as an exhaustive enumeration but rather as examples with regard to the underlying concept of the present invention.

### Drawings

- Fig. 1: is a schematic block diagram of an optical receiver comprising a clock recovery circuit in accordance with the present invention;
- Figs. 2a-c: are diagrams illustrative of a signal shape at various points of the clock recovery circuit of Fig. 1; and
- Fig. 3: is a flow chart of an embodiment of the method in accordance with the present invention.

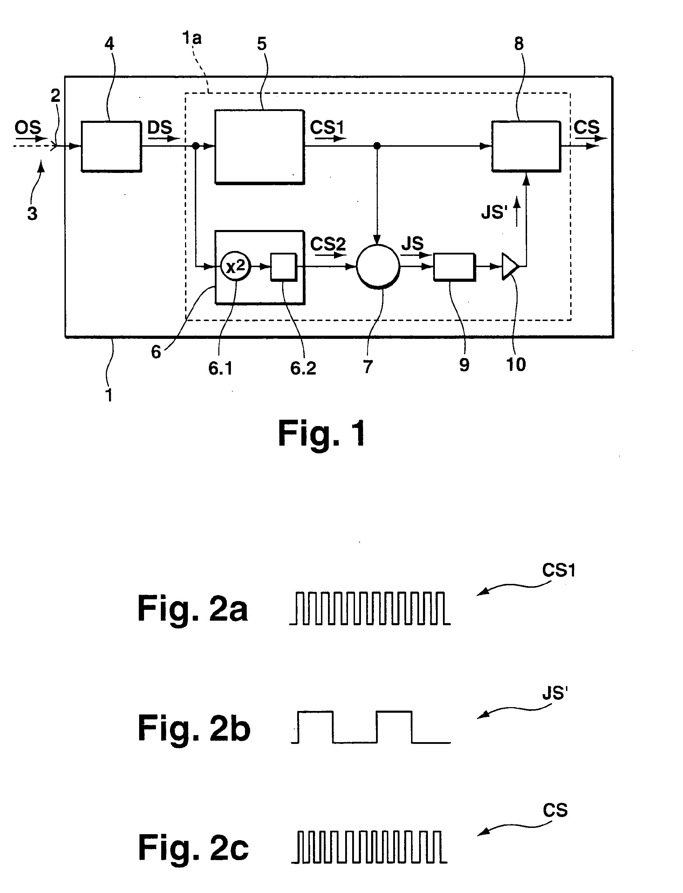

**Fig. 1** shows a schematic block diagram of an optical receiver **1.** The optical receiver **1** has an input **2** for receiving an optical signal **OS** transmitted on an optical transmission link **3** of an optical transmission system (not shown). In operative connection with input 2, the optical receiver 1 further comprises signal converting means **4** adapted for converting the received optical signal OS into a digital signal in the electric domain **DS** as known to a person skilled in the art. Furthermore, the optical receiver 1 may include additional optical and / or electrical signal processing means, e.g. demultiplexing means (not shown) or the like, as known to a person skilled in the art. The signal converting means 4 is connected with a first clock recovery sub-circuit **5** and - in parallel with said first clock recovery sub-circuit 5 - with a second clock recovery sub-circuit **6.** In the embodiment shown, the first clock recovery sub-circuit 5 is devised as a digital PLL-type sub-circuit adapted to generate a first auxiliary clock signal **CS1.** The second clock recovery sub-circuit 6 of Fig. 1 is devised as a filter-type sub-circuit adapted to generate a second auxiliary clock signal **CS2.** Both the first clock recovery sub-circuit 5 and the second clock recovery sub-circuit 6 are connected with a phase comparator **7,** which is adapted to compare respective phases of the first and second auxiliary clock signals CS1, CS2. The phase comparator 7 of Fig. 1 is further adapted to produce an output signal **JS** and is connected with a phase modulator **8** via filter means **9** and amplifying means **10.** Beside said connection with phase comparator 7, the phase modulator 8 is further connected with the first clock recovery sub-circuit 5. In the embodiment of Fig. 1, the second filter-type clock recovery sub-circuit 6 includes a non-linear element **6.1** operatively connected with a broadband clock filter element **6.2,** wherein the non-linear element 6.1 preferably is a x²-element, as known to a person skilled in the art.

The first and second clock recovery sub-circuits 5, 6, the phase comparator 7, the phase modulator 8 as well as the filter means 9 and the amplifying means 10 constitute a clock recovery circuit represented by means of a dashed box and denoted by means of reference numeral **1a** in Fig. 1.

During a preferred mode of operation of the optical receiver 1 of Fig. 1, an optical signal OS transmitted on optical transmission link 3 is input into the optical receiver 1 at input 2. The optical signal OS comprises a clock signal and a high-frequency jitter component due to polarisation scrambling in the optical domain performed by means of further elements, e.g. Polarisation Scramblers (PSCs) (not shown), present in the optical transmission link 3. In signal converting means 4, the received optical signal OS is converted to a digital signal DS in the electrical domain such that said digital signal DS, too, comprises a clock signal and a high-frequency jitter component due to polarisation scrambling in the optical domain. The digital signal DS is fed to both the PLL-type clock recovery sub-circuit 5 and to the filter-type clock recovery sub-circuit 6, which generate the first and second auxiliary clock signals CS1, CS2, respectively. The phases of the auxiliary clock signals CS1, CS2 are compared by means of phase comparator 7, which produces output signal JS representing a high-frequency jitter signal depending on the phase difference between the first and the second auxiliary clock signals CS1, CS2. Output of phase comparator 7 is effectively limited in amplitude and / or frequency by filter means 9, thus removing noise. Following amplification in amplifying means 10, signal **JS'** derived from the high-frequency jitter signal JS is input to phase modulator 8 for modulating the phase of the first auxiliary clock signal CS1 directly provided to phase modulator 8 by the first clock recovery sub-circuit 5. After said phase modulation, phase modulator 8 outputs a recovered clock signal **CS** for use by other components (not shown) of the optical receiver 1.

**Figs. 2a-c** show diagrams illustrative of respective shapes of signals at various points of the clock recovery circuit 1 a of Fig. 1.

**Fig. 2a** shows the first auxiliary clock signal CS1 generated by the PLL-type clock recovery sub-circuit 5 of Fig. 1. Since sub-circuit 5 will generally not be able to follow the fast jitter of the digital signal DS said auxiliary clock signal CS1 effectively represents a clock signal with high-frequency jitter components removed, thus showing only slow jitter, typically below 10 MHz. In contrast to this, the second auxiliary clock signal CS2 (not shown) generally represents a noisy clock signal, which still includes both slow and fast jitter components. This difference of the first and second auxiliary clock signals CS1, CS2 is due to the inherent functional differences of the first and second clock recovery sub-circuits 5, 6 of Fig. 1, as known to a person skilled in the art.

**Fig. 2b** shows the phase difference signal of phase comparator 7 (Fig. 1) in the form of signal JS' after further signal processing in filter means 9 and amplifying means 10. Since both the first and second auxiliary clock signals CS1, CS2 comprise said slow jitter component (cf. Fig. 2a), signal JS' of Fig. 2b is illustrative of a remaining fast jitter component not present in the first auxiliary clock signal CS1 provided by a PLL-type clock recovery sub-circuit 5 (Fig. 1).

**Fig. 2c** shows the output signal CS of phase modulator 8 (Fig. 1) which is generated by modulating the phase of said first auxiliary clock signal CS1 with the high-frequency jitter signal JS, JS' obtained from the phase comparator 7 (Fig. 1).

In this way, there is provided a clock recovery circuit 1a for use in an optical receiver 1, which is both distortion and jitter tolerant owing to the combined action of first and second clock recovery sub-circuits 5, 6 connected in parallel, as described in detail above.

As will be appreciated by a person skilled in the art, the above-described first and second clock recovery sub-circuits can be replaced by any other type of clock recovery sub-circuit, respectively, as long as the aforementioned characteristics with respect to distortion and / or jitter tolerance are achieved. In other words: THE FIRST CLOCK RECOVERY SUB-CIRCUIT 5 MUST BE ADAPTED TO RECOVER A CLOCK SIGNAL EVEN IF THE DISTORTION OF THE data SIGNAL DS IS HIGH. However, SUCH A CLOCK RECOVERY generally will FOLLOW ONLY SLOW JITTER FROM THE DATA SIGNAL DS. In addition, the second clock recovery sub-circuit 6 must be adapted to produce an auxiliary clock signal including the fast jitter components of data signal DS, which are effectively filtered by the first clock recovery sub-circuit 5, such that the recovered clock signal CS may be generated comprising all jitter components present in the digital signal DS regardless of a distortion of the latter.

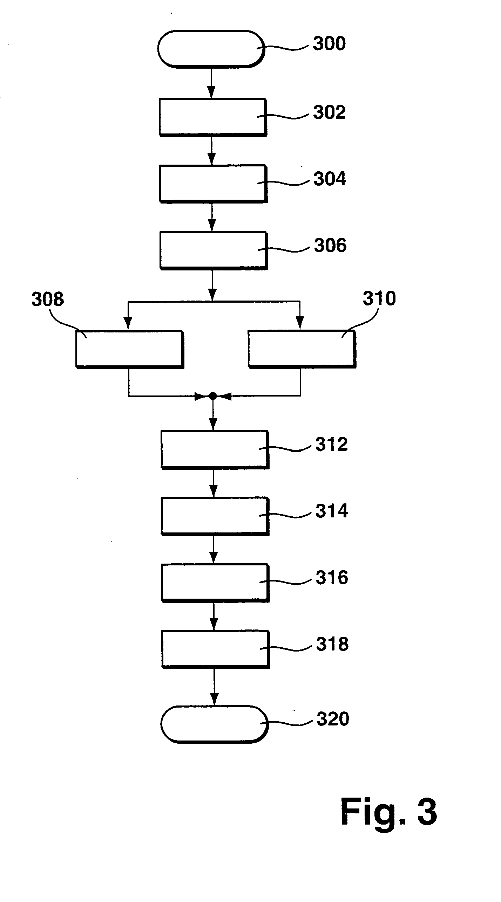

**Fig. 3** shows a flow chart of an embodiment of the method in accordance with the present invention. The method starts in step **300.** In subsequent step **302** the optical signal OS (Fig. 1) is received by the optical receiver in accordance with the present invention. Then, in step **304** the optical signal is converted to a digital signal DS (Fig. 1) presenting distortion and jitter, as described previously. In step **306** the digital signal is provided to the clock recovery circuit 1 a (Fig. 1) in accordance with the present invention. During subsequent steps **308, 310 -** performed in parallel - the digital signal is provided to the first PLL-type clock recovery sub-circuit 5 (Fig. 1) and to the second filter-type clock recovery sub-circuit 6 (Fig. 1) for generating the first and second auxiliary clock signals, respectively. Said first and second auxiliary clock signals are then combined in step **312** for comparing respective phases of the first and second auxiliary clock signals for to produce a high-frequency jitter signal depending on phase difference between said auxiliary clock signals. After further signal processing (noise reduction filtering and amplifying) in subsequent step **314,** said high-frequency jitter signal is provided to the phase modulator 8 (Fig. 1) for modulating the phase of the first auxiliary clock signal (step **316**), and a recovered clock signal with slow and fast jitter components is output from the phase modulator in step **318** for use by other components of the optical receiver. The inventive method terminates with step **320.**

The above-described distortion and jitter tolerant clock will improve PMD tolerance of PMD mitigation by fast polarisation scrambling, preferably in conjunction with forward error correction (FEC) schemes used in the optical receiver, while allowing for extension to UFEC with even higher PMD mitigation efficiency. Owing to the fast jitter control by a simple feed forward element rather than a demanding feedback scheme, demands on the electronics of the first clock recovery sub-circuit are relaxed, which leads to an enhanced cost-effectiveness of the proposed clock recovery circuit and / or optical receiver. Furthermore, in contrast to some prior art, no complex adaptation to scrambling frequencies is necessary.

## Claims

1. A clock recovery circuit (1a) for recovering a clock signal from a digital signal (DS) comprising a high-frequency jitter component due to polarisation scrambling in the optical domain, said clock recovery circuit (1a) comprising:
- a first clock recovery sub-circuit (5) adapted to generate a first auxiliary clock signal (CS1) with said high-frequency jitter component at least partly removed,
- a second clock recovery sub-circuit (6) adapted to generate a second auxiliary clock signal (CS2) still comprising said high-frequency jitter component,
- a phase comparator (7) connected with the first and second clock recovery sub-circuits and adapted to compare respective phases of the first and second auxiliary clock signals to produce a high-frequency jitter signal (JS, JS') depending on a phase difference between the first and second auxiliary clock signals, and
- a phase modulator (8) connected with the first clock recovery sub-circuit and the phase comparator and adapted to modulate a phase of the first auxiliary clock signal with the high-frequency jitter signal to generate a recovered clock signal (CS).

2. The clock recovery circuit (1a) of claim 1, wherein the first clock recovery sub-circuit (5) is a digital PLL-type clock recovery sub-circuit.

3. The clock recovery circuit (1a) of claim 1, wherein the second clock recovery sub-circuit (6) is a filter-type clock recovery sub-circuit.

4. The clock recovery circuit (1a) of claim 1, further comprising filter means (9) adapted to perform linear or non-linear processing of an output of the phase comparator (7), in particular limit an output amplitude and /or filter an output frequency.

5. An optical receiver (1) comprising means (4) for converting a received signal (OS) in the optical domain to a digital signal (DS) in the electrical domain, said digital signal comprising a clock signal and a high-frequency jitter component due to polarisation scrambling in the optical domain, said optical receiver (1) further comprising the clock recovery circuit (1a) according to any one of claims 1 to 4.

6. A method of recovering a clock signal from a digital signal (DS) comprising the clock signal and a high-frequency jitter component due to polarisation scrambling in the optical domain, said method comprising the steps of:
- generating from the digital signal a first auxiliary clock signal (CS1) with said high-frequency jitter component at least partly removed,
- generating from the digital signal a second auxiliary clock signal (CS2) still comprising said high-frequency jitter component,
- comparing respective phases of the first and second auxiliary clock signals to produce a high-frequency jitter signal (JS, JS') depending on a phase difference between the first and second auxiliary clock signals, and
- modulating a phase of the first auxiliary clock signal with the high-frequency jitter signal to generate a recovered clock signal (CS).

7. The method of claim 6, further comprising the step of linear or non-linear processing of the high-frequency jitter signal (JS), in particular to limit an amplitude and / or to filter a frequency thereof.
